# NEUE EUROPÄISCHE PATENTSCHRIFT

(11) **EP 0 287 599 B2**
(45) Veröffentlichungstag und Bekanntmachung des Hinweises auf die Entscheidung über den Einspruch: **27.10.1993**
(45) Hinweis auf die Patenterteilung: 27.03.1991
(21) Anmeldenummer: 87906577.9
(22) Anmeldetag: 10.10.1987
(51) Int. Cl.: B60H 1/00

(54) **SENSOR ZUR STEUERUNG VON UMLUFTKLAPPEN VON KRAFTFAHRZEUGEN**
SENSOR FOR CONTROLLING AIR CIRCULATION VALVES OF MOTOR VEHICLES
CAPTEUR POUR COMMANDER DES CLAPETS DE CIRCULATION D'AIR SUR DES VEHICULES A MOTEURS

(30) Priorität: 11.10.1986 DE 3634786; 31.12.1986 DE 8634907 U
(43) Veröffentlichungstag der Anmeldung: 26.10.1988
(73) Patentinhaber: Hölter, Heinz, Dipl.-Ing., D-45964 Gladbeck (DE)
(72) Erfinder: RUMP, Hanns, D-4750 Unna-Massen (DE); VOSS, Wolfgang, D-4750 Unna (DE); HÖLTER, Heinz, D-4390 Gladbeck (DE)
(74) Vertreter: Spalthoff, Adolf, Dipl.-Ing.
(86) Internationale Anmeldenummer: EP8700592
(87) Internationale Veröffentlichungsnummer: WO8802704

(56) Entgegenhaltungen:
- EP-A- 0 092 195
- EP-A- 0 179 625
- DE-A- 3 304 324
- US-A- 4 306 444
- US-A- 4 478 049

## Beschreibung

Die Erfindung betrifft einen Sensor zur Steuerung von Umluftklappen von Kraftfahrzeugen, bestehend aus einem Halbleiter als Schadstoff-Sensorelement und einer elektronischen Sensorsignal-Vorverarbeitung wie aus der US-A-4 478 049 bekannt.

Halbleitersensoren, die ihren inneren Widerstand verändern, wenn Schad- und andere Gase vom Sensorerkannt werden, sind in vielfältigen Anwendungen bekannt.

Das Funktionsprinzip ist derart, daß der Sensor zusammen mit einem Außenwiderstand einen Spannungsteiler bildet. Die abgegriffene Mittelspannung ist ein Maß für die Belastung der Luft.

Weiter ist es bekannt, daß die Halbleitersensoren temperaturempfindlich sind. Darum ist bereits vorgeschlagen worden, diese Temperaturempfindlichkeit auszugleichen, indem z.B. der Außenwiderstand mit einem NTC-Widerstand beschaltetwird, dessen Charakteristik der Temperaturcharakteristik des Sensors entspricht.

Ferner ist es bekannt, daß die Empfindlichkeit der Sensoren abhängig ist von der Luftfeuchte. Die Sensoren werden in der Regel empfindlicher mit ansteigender Feuchte. Um Feuchte und Temperatur erfolgreich zu kompensieren, ist ein erheblicher Schaltungsaufwand notwendig.

Beim Einsatz eines derartigen Sensors zur Steuerung der Umluftklappen in Kraftfahrzeugen kann diese Querempfindlichkeit gegenuber vorzugsweise Feuchte zu unterschiedlichen Schaltpunkten führen, die subjektiv und objektiv falsch sind.

Es ist daher vorgeschlagen worden, das abgegriffene Spannungssignal zu differenzieren und jeweils dann zu schalten, wenn eine nachhaltige Änderung des Schadstoffpegels erfolgt Dieses Verfahren unterdrückt alle Einflüsse, die auf Temperatur und Feuchte zurückführbar sind. Diese Methode, bei der lediglich der Differenzwert ubertragen wird, hat allerdings den Nachteil, daß bei länger andauernden, statischen Situationen bei gleichzeitg hoher Schadstoffbelastung der Schaltvorgang nach Ablauf einer gewissen Zeit rückgängig gemacht wird.

Außerdem spielt bei dieser Differenzierung eine sehr große Rolle, ob der Anstieg der Schadstoffkonzentration schnell, langsam oder sogar schleichend erfolgt. Je nach Auslegung des Differenziergliedes, was - elektrisch gesehen - ein Hochpass ist, werden sehr langsame Anstiege der Schadstoffkonzentration nicht erkannt.

Wird das Kraftfahrzeug beispielsweise auf der Landstraße in sauberer Umgebungsluft gefahren, wirkt sich das Vorhandensein beispielsweise eines anderen Fahrzeuges ungewöhnlich störend aus, weil das Empfinden des Geruchssinns deutlich sensibilisiert worden ist.

Im umgekehrten Falle ist es im dichten Großstadtverkehr nicht wünschenswert, daß die Frischluftklappe des Fahrzeuges nahezu permanent geschlossen ist. Weil auch die Sensibilität gegenüber Schadstoffen deutlich gemindert ist, ist es hier wünschenswert, wenn die Ansprechempfindlichkeit abgesenkt ist.

Von diesem Stand der Technik ausgehend liegt der Erfindung die Aufgabe zugrunde, unter Vermeidung vorerwähnter Nachteile einen Sensor der eingangs genannten Art zu schaffen, welcher nicht nur die Einflüsse von Temperatur und Feuchte absolut unterdrückt, sondern dessen Empfindlichkeit gegenüber Schadstoffen sich der jeweiligen Situation selbsttätig anpaßt.

Zur Lösung dieser Aufgabe werden erfindungsgemäß die im Kennzeichen des Hauptanspruchs aufgeführten Merkmale vorgeschlagen. Auf diese Weise wird erreicht, daß kurzfristige Änderungen des Sensorsignals zum gewünschten Schalten der Anordnung führen, daß sich der Schaltpunkt jedoch innerhalb festgelegter Grenzen verändern kann, insofern Feuchte- und Temperaturdrift des Sensors zurückgedrängt wird. Außerdem erfolgt vorteilhaft und ohne weiteren Bauteileaufwand eine Anpassung der Anordnung an die subjektive Beurteilung des menschlichen Riechorgans, denn es ist bekannt, daß der Geruchssinn dann schon auf kleinste Schadstoffmengen reagiert, wenn er vorher durch Aufenthalt in frischer Luft entsprechend konditioniert wurde.

Die zur vorteilhaften Ausgestaltung der Erfindung dienenden Mittel und Merkmale sind Gegenstand der Unteransprüche.

Ausführungsbeispiele der Erfindung sind an Hand der Zeichnung näher erläutert, und zwar zeigt:
Figur 1 das Prinzipschaltbild einer ersten Ausführungsform,
Figur 2 das Prinzipschaltbild einer zweiten Ausführungsform,
Figur das Prinzipschaltbild einer dritten Ausführungsform,
Figur 4 die Darstellung von U, der Ausgansspannung des Digital-Analogwandlers als Verteilungsfunktion über die Zeit,
Figur 5 die Formel zur Berechnung der Referenzspannung,
Figur 6 das Prinzipschaltbild einer vierten Ausführungsform,
Figur 7 ein Diagramm mit dem Verlauf der Sensorsowie der sich ergebenden Schaltspannung und
Figur 8 eine gegenüber der Ausführung nach Figur 6 abgeänderte Anordnung des Sensors.

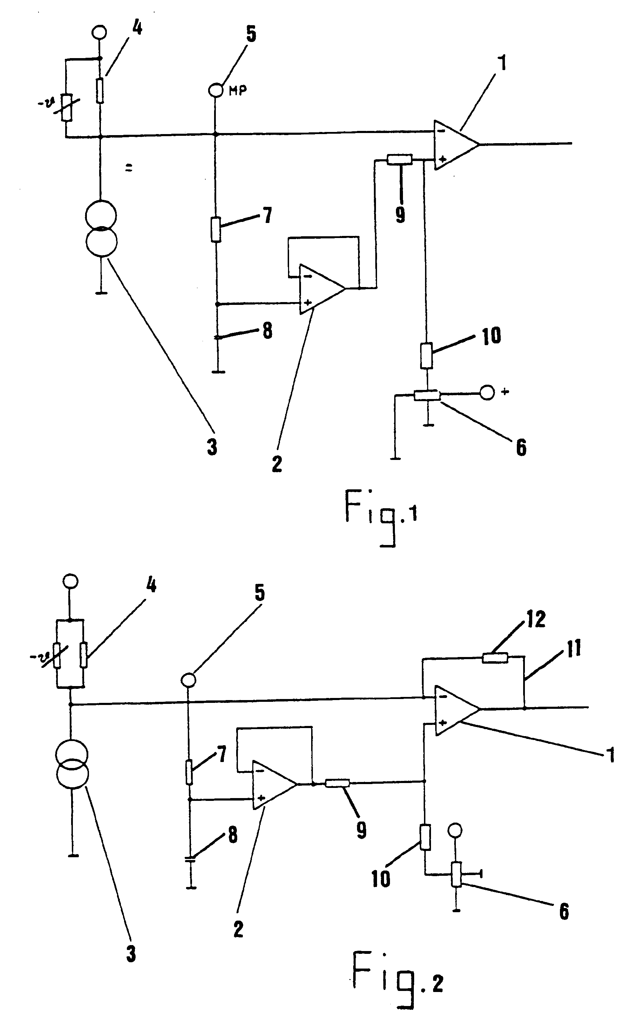

In Figur 1 ist der Sensor 3 als Spannungsteiler mit einem Außenwiderstand 4 ausgebildet, der temperaturkompensiert ist. Am Meßpunkt 5 wird die Sensorspannung abgenommen und einem Schaltverstärker 1 zugeführt. Der Arbeitspunkt des Schaltverstärkers 1 kann Ober das Potentiometer 6 eingestellt werden. Das Potentiometer 6 kann auch durch eine Widerstandskombination ersetzt werden.

Das am Meßpunkt 5 stehende Sensorsignal wird einem Integrierglied zugeführt, was durch den Wider stand 7 und den Kondensator 8 gebildet wird.

Die Zeitkonstante dieses Integriergliedes 7, 8 ist so gewählt, daß kurze Änderungen der Sensorspannung nahezu keine Auswirkungen zeigen, langwährende stetige Änderungen dagegen sehr wohl.

Als praktisch hat sich eine Zeitkonstante herausgestellt die etwa 2 min. ist.

Über einen Operationsverstärker 2, der als nicht invertierender Impendanzwandler geschaltet ist, gelangt das integrierte Signal über den Widerstand 9 zum Schaltverstärker 1, wo es die Schaltschwelle verändert.

Da der Einfluß von Feuchte, Temperatur und des subjektiven Empfindens nicht so groß werden soll, daß der Sensor 3 bei einer über eine längere Zeit vorliegenden starken Belastung der Luft nicht mehr schaltet, wird der Einfluß der oben beschriebenen Anordnung gemindert.

Erfindungsgemäß wird das erreicht, indem das Verhältnis der Widerstände 9 und 10 zueinander die Fähigkeit des Schaltverstärkers 1 bestimmen, seinen Arbeitspunkt zu verändern.

In der bevorzugten Auslegung sind die Wider stände 9, 10 so dimensioniert, daß der Schaltpunkt im Bereich von +/- 15% gleiten kann.

Damit wird durch die Erfindung folgender Vorteil erreicht.
1. Die statischen Einflüsse von Luftfeuchte und Temperatur werden wirkungsvollunterdrückt. Die dynamischen Eigenschaften des Sensors, d.h. das Ansprechverhalten auf Schadstoffbelastungen der Luft, ist dagegen nicht nachteilig beeinflußt.
2. Bei Überwiegen schadstoffarmer Luft ist das Schaltverhalten des Sensors empfindlicher und trägt damit physiologisch-subjektiven Gegebenheiten Rechnung.
3. Bei permanent hoher Belastung ist das Schaltverhalten des Sensors unempfindlicher, womit erreicht wird, daß die Lüftungsklappe nicht über einen unzulässig langen Zeitraum geschlossen bleibt. sondern sich in Phasen relativ geringbelasteter Luft wieder öffnen kann, was die klimatische Situation im Innenraum von Fahrgastzellen vereinfacht, weil insbesondere Feuchtigkeit ausgetragen werden kann. Damit ist die Gefahr deutlich verringert, daß sich z.B. die Scheiben beschlagen.
4. Ein weiterer Vorteil der Erfindung ist die Tatsache, daß sich eine genaue Selektion der Sensorelemente weitgehend erübrigt, weil sich die Schaltung sozusagen selbst abgleicht.

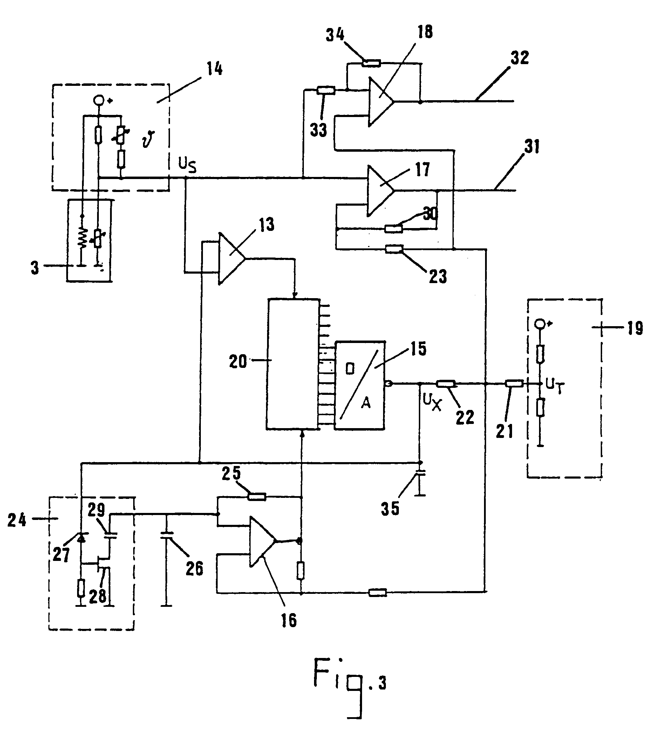

Die Ausführung nach Figur 2 unterscheidet sich von der nach Figur 1 dadurch, daß diese einen analogen Ausgang aufweist, bei dem ebenfalls der vorerwähnte Kompensationseffekt stattfindet. Im Gegenkopplungszweig 11 ist ein Widerstand 12 vorgesehen. Dadurch wird erreicht, daß das Signal auf der analogen Kennlinie geführt wird. Es findet somit eine Spannungsrückführung im Gegenkopplungszweig 11 statt. Durch den Widerstand 12 in der Spannungsrückführung wird somit eine Gegenkopplung erzielt, die die Ubertragung eines analogen Signals ermöglich, wobei über den nichtinvertierten Eingang eine Korrekturspannung eingegeben wird, die die Langsameinflüsse zurückdrängt und kompensiert.

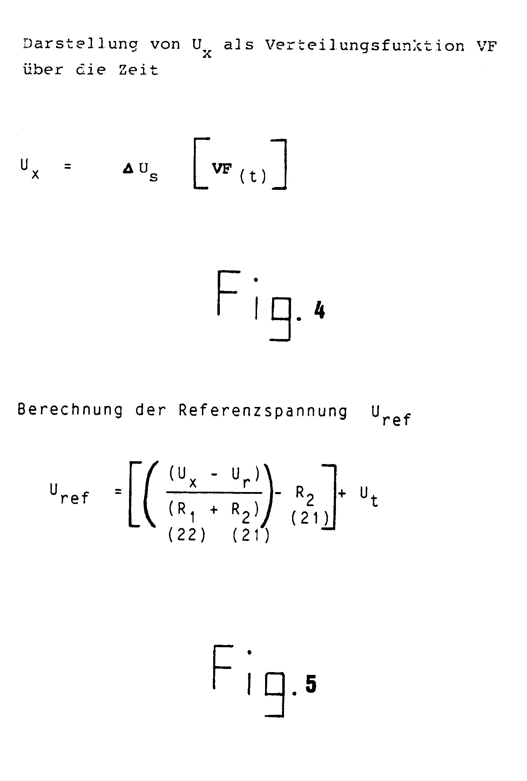

Dem Ausfuhrungsbeispiel nach Figur 3-5 liegt der nachstehend beschriebene Gedanke zugrunde und dieses gibt einen äußerst vorteilhaften Lösungsweg für das geschilderte Problem an.

Die Veränderung der Referenzspannung durch Führen des Signals über einen Tiefpass, nicht ganz korrekt als Integration bezeichnet, hat zur Folge, daß hohe Schadstoffspitzen, wie sie in der Fahrpraxis allerdings oft auftauchen, zu einer sehr schnellen Anpassung des Referenzwertes führen können. Das kann dazu führen, daß in unerwünschter Weise der Sensor bereits nach wenigen Schadstoffeinbrüchen entsprechender Größenordnung unempfindlich gemacht wird, obwohl dafür eigentlich kein vemünftiger Grund vorliegt, denn bekanntlich ist der Spannungsanstieg am Ausgang des Tiefpasses neben der Dimension des Widerstands und des Kondensators eine Funktion der Eingangsspannung.

Die Schaltung nach Figur 3 umgeht diesen Nachteil und überlagert die Referenzspannung mit einem echten Integrationssignal, das vorteilhaft einen nahezu beliebigen Zeiffaktor haben kann. Diese Tatsache ist wichtig, wenn man berücksichtigt, daß Feuchte-und Temperaturwerte sich äußerst langsam ändern, und daß das subjektive Empfinden des menschlichen Riechorgans an zwar individuelle, jedoch in der Regel lange Zeitkonstanten gebunden ist.

Bei dem Ausfuhrungsbeispiel nach Figur 3 besteht der Sensor 3 aus einem schadstoffabhängigen veränderlichen Halbleiterwiderstand, der beheizt ist. Er bildet einen Spannungsteiler mit einer Widerstandskombination 14, die entweder aus einem einzigen Widerstand bestehen kann, oder aus einer Anordnung wie dargestellt, wobei einer der Widerstande ein NTC-Widerstand ist, dessen Parameter so gewählt ist, daß die Temperaturabhängigkeit des Sensors 3 genauso groß ist wie der Temperaturgang der Widerstandskombination 14. Im Spannungsteilerwird das Sensorsignal Us gewonnen. Das Sensorsignal Us gelangt auf einen Komparator 17, dessen Referenzspannung aus einem Spannungsteiler 19 gewonnen wird, dessen Teilerspannung Ut über den Widerstand 21 und den Widerstand 22 mit einem weiteren Signal gemischt wird und über den Widerstand 23 an den Komparator 17 gelangt. Das Sensorsignal gelangt weiterhin zu einem anderen Komparator 13, an dessen anderen Eingang das Ausgangssignal eines Digital-Analogwandlers 15 gelegt ist.

Die Ausgangsspannung des Digital-Analogwandlers 15 wird nachfolgend als Ux bezeichnet Der Digital-Analogwandler 15 wird von einem VorwärtsRückwärts-Zähler 20 angesteuert, der von einem Clockgenerator beliebiger Frequenz angesteuert wird. Die Clockfrequenz wird so gewählt, daß bei Benutzung eines 8-Bit-Wandlers das 8. Bit nach einer Zeit erreicht wird, die der vorstehend beschriebenen Zeitkonstante nahekommt, also ca. 3-10 Minuten.

Der Zähler 20 ist ein Vorwärts- oder Rückwartszähler. Die Vorwärts-Rückwärts-Funktion ergibt sich je nach Schaltlage des Komparators 13. Bei Inbetriebnahme ist regelmäßig derZählerinhalt = 0. Also ist das Ausgangssignal Ux ebenfalls = 0. Das Sensorsignal Us hat jedoch einen positiven Wert. Der Komparator 13 ist daher so geschaltet, daß der Ausgangswert einen Wert annimmt, der den Zähler 20 zum Aufwärtszählen veranlaßt Nach einer Zeitspanne, die von der Clockfrequenz abhängig ist, erreicht die Ausgangsspannung Ux des Digital-Analogwandlers 15 den Wert der Sensorspannung Us. Der Komparator 13 wird dann umschalten und als Rückwärtszählerarbeiten. Insofern pendelt bei statischer Situation der Sensorspannung Us die Ausgangsspannung Ux des Digital-Analogwandlers 15 um den Wert der Sensorspannung. Weicht die Sensorspannung ab, eilt die Ausgangsspannung Ux der Sensorspannung linear mit einer Zeit nach, die durch die Clockfrequenz bestimmt wird. Insofern entspricht die Ausgangsspannung Ux des Digital-Analogwandlers 15 einem Wert, der als stetige Verteilung mit zeitabhängiger Verteilungsfunktion VF(t) als Millelwert aus dem Integral der Sensorspannung bezeichnet werden kann. Vorteilhaft ist, daß die Änderungsgeschwindigkeit konstant ist und der Änderungsbetrag (über die Zeit) konstant ist und nicht von der Sensorspannung abhängig ist.

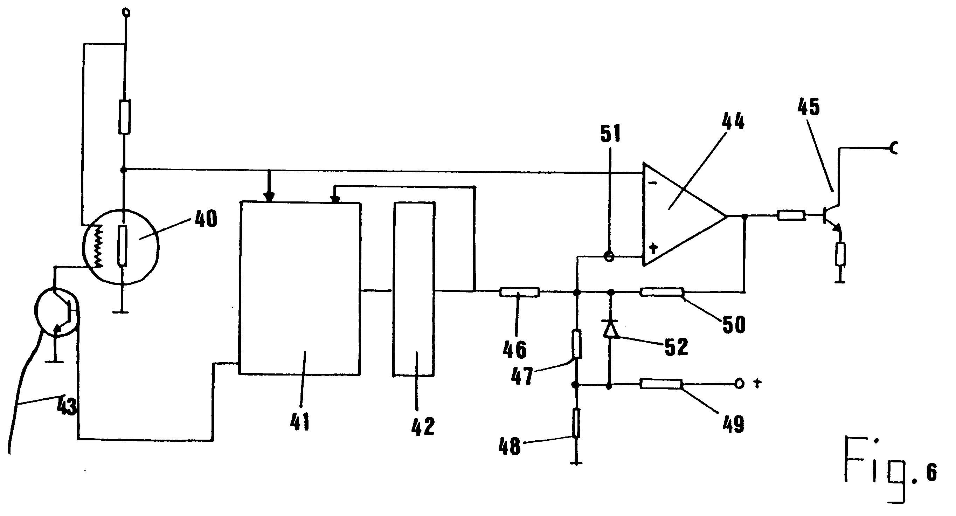

Die Formel in Figur 4 gibt die Funktion der Ausgangsspannung Ux an.

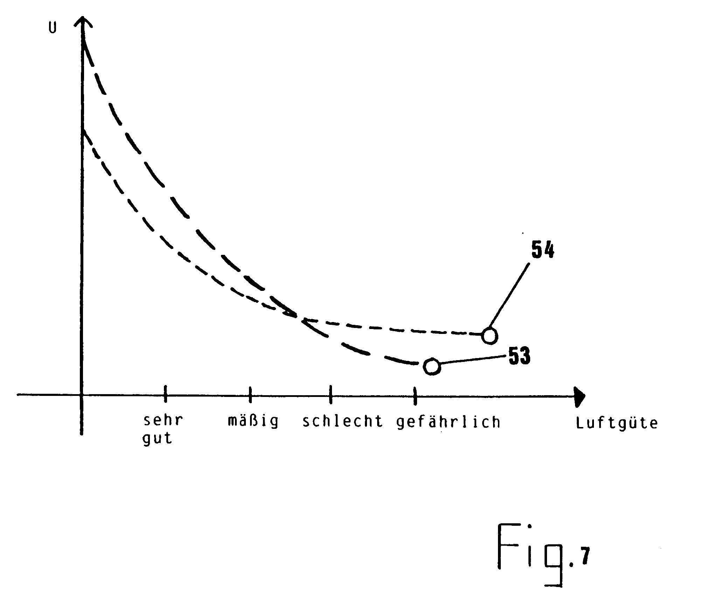

Die Überlagerung der Referenzspannung mit der so gebildeten Korrekturspannung Ux erfolgt durch Addition der Teilerspannung Ut und der Spannung Ux an den Widerständen 22 und 21. Die Referenzspannung kann errechnet werden nach der Formel, die in Figur 5 angegeben ist.

In der bevorzugten Ausführung werden die Widerstände 21, 22 so dimensioniert, daß sich die Referenzspannung um einen Wert verändern kann, der etwa +/- 30% beträgt. Es können auch andere Werte gewählt werden. Erfahrungsgemäß ist mit einer solchen Dimensionierung einmal die feuchteabhängige Drift des Sensors aufgefangen. Diese Drift, die naturgemäß äußerst langsam erfolgt, wird von der Schaltung äußerst zuverlässig zurückgedrängt. Bei sehr großer Schadstoffbelastung der Außenluft ändert sich die Referenzspannung tendenziell so, daß die Schaltfunktion in Richtung "wenigen empfindlich" verschoben wird. Sinngemäß wird die Anordnung empfindlicher gegenüber Schadstoffspitzen, wenn der Sensor überwiegend schadstoffreier Außenluft ausgesetzt ist Insofern entspricht das Verschieben des Schaltpunktes vorteilhaft der subjektiven Wahrnehmungsfähigkeit des menschlichen Riechorgans.

Als vorteilhafter Nebeneffekt ergibt sich, daß die Schaltung direkt nach dem Einschalten relativ unempfindlich ist, weil die Ausgangsspannung Ux sich erst aufbauen muß. Da bekannt ist, daß Halbleitersensoren eine gewisse Formationszeit benötigen, ist damit unerwünschten Schaltvorgängen erfolgreich entgegengewirkt.

Um die Ausgangsspannung Ux des Digital-Analogwandlers 15schneiierauf einen Wert zu bringen, der der typischen Sensorspannung entspricht, kann eine Anordnung 24 eingefügtwerden, die diesen Anlaufvorgang erheblich beschleunigt. Die Clockfrequenz wird im wesentlichen durch die Zeitkonstante der Widerstände 23, 25 und des Kondensators 26 bestimmt Ist die Spannung Ux klein, ist die Zenerdiode 27 noch sperrend und demzufolge der FET-Transistor 28 gesperrt. Der Kondensator 26 ist so gewählt, daß die Clockfrequenz relativ hoch ist, der Zähler 20 also rasch hochgezählt wird. Nach Erreichen der Zener-Spannung wird der Transistor 28 leitend und schaltet den Kondensator 29 parallel zu dem Kondensator 26. Damit wird die Clockfrequenz entsprechend verlangsamt Vorteilhaft an dieser Anordnung ist, daß die Schaltung sehr schnell in den Arbeitsbereich gelangt, wobei der zusätzliche Bauteileaufwand gering ist. Es sei darauf hingewiesen, daß die vorstehend beschriebene grundsätzliche Anordnung auch funktionsfähig ist, wenn die zuletzt beschriebene Maßnahme nicht eingefügt ist.

Das Schaltverhalten kann eine frei wählbare Hysterese aufweisen, indem das Referenzspannungssignal nicht direkt dem Komparator 17 zugeführt wird, sondern über einen Vorwiderstand 23, wobei durch einen weiteren Widerstand 30 eine Mitkopplung eintritt.

Neben einem Schaltausgang 31 ist ein Analogausgang 32 implementiert, wobei das Sensorsignal auf einen Operationsverstärker 18 gegeben wird, dessen Verstärkung durch das Verhältnis der Widerstande 33 und 34 bestimmt wird, wobei der nicht invertierende Eingang des Operationsverstärkers 18 mit dem Referenzspannungssignal Uref beaufschlagt wird.

Der Digital-Analogwandler 15 kann auch durch ein R/2R-Netz-werk ersetzt werden.

Die Spannung am Ausgang des Digital-Analogwandlers 15 kann durch einen Kondensator 35 geglättet werden.

Der Spannungsteiler 19 kann zumindestens teilweise aus einem einstellbaren Widerstand bestehen zum Zwecke der freien Einstellbarkeit der Referenzspannung.

Die vier Verwendung findenden Operationsverstärker 13, 16, 17, 18 können in einem Gehäuse integriert sein.

Vorteilhaft bezieht der Frequenzgenerator 16 seine Mittelspannung aus dem Spannungsteiler 19, wodurch Bauteile eingespart werden können.

Im schaltungstechnischen Detail sind durch Verwendung anderer Bauteile Varianten möglich, ohne daß damit der grundlegende Gedanke der Erfindung verändert wird.

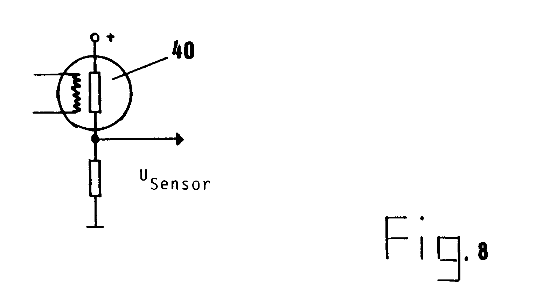

Bei dem Ausführungsbeispiel nach Figur 6-8 ist mit 40 der Sensor, mit 41 die Integrations-Logik, mit 42 der Digital-Analogwandler, mit 43 der Schalttransistor für die Sensorheizung, mit 44 der Komparator, mit 45 der Schaltungsausgang und mit 46,47,48,49, 50 die Widerstände des Spannungsteilers bezeichnet.

Die Wirkung des Widerstandsnetzwerkes besteht darin, eine Schaltspannung zu erzeugen, die im Bereich guter bis mäßig belasteter Luft die Schaltspannung so legt, daß der Komparator 44 nicht schaltet.

Im Bereich schlechter oder gar gefährlicher Belastung wird die Schaltspannung so liegen, daß bei statischer Sensorspannung der Komparator 44 schalten wird.

Im Spannungsteiler 46-50, der an der sich bildenden Referenzspannung am Ausgang des Digital-Analogwandlers 42 liegt, bildet sich eine Schaltspannung 51 aus, die am nichtinvertierenden Eingang des Komparators 44 liegt, wobei eine Diode 52 parallel zum Widerstand 47 liegt, die bei Erreichen eines bestimmten Pegels leitend wird und die Kennlinie der Schaltspannung stark krümmt.

Es kann wünschenswert sein, die Schaltspannung noch stärker zu krümmen, so daß dann, wenn die statische Sensorspannung und damit die Ausgangsspannung des Digital-Analogwandlers 42 einen frei bestimmbaren Wert erreicht, die Diode 52 leitend wird und einen Stromfluß vom Digital-Analogwandler 42 durch den Widerstand 46, die Diode 52 und den Widerstand 49 erzeugt, der die Steilheit der Schaltspannung in diesem Teil der Kurve deutlich verringert, wodurch die Sicherheit steigt, daß bei objektiv gefährlicher Schadstoffbelastung der Ausgang stets geschaltet ist

Aus Figur 7 ist die Dioden-Wirkung ersichtlich. Mit 53 ist die Kurve für die Sensorspannung und mit 54 die Kurve für die Schaltspannung 51 bezeichnet.

Es ist auch möglich, den Sensor 40, wie in Figur 8 gezeigt, anzuordnen. Damit kehrt sich der Spannungsverlauf in bezug auf den Schadstoffpegel um. Die vorbeschriebene Anordnung bleibt damit gültig, wenn die Polarität der Diode umgedreht wird. Auch invertiert der Schaltausgang.

## Patentansprüche

1. Sensor zur Steuerung von Umluftklappen von Kraftfahrzeugen, bestehend aus einem Halbleiter als Schadsotff-Sensorelement (3) und einer elektronischen Sensorsignal-Vorverarbeitung, (2,7,8) dadurch gekennzeichnet, daß die Sensorsignal-Vorverarbeitung ein Integrierglied (7, 8) aufweist, mittels dem durch Integration des Sensorsignals ein Korrektursignal erzeugt wird, und, daß sich die Schaltspannung des Schaltverstärkers (1) durch Addition der Spannung des am Ausgang mit einem Widerstand (9) versehenen Integrierglieds (7, 8) und der Spannung des am Ausgang mit einem Widerstand (10) versehenen Spannungsteilers (6), ergibt, wobei das Verhältnis der beiden Widerstände (9, 10) zueinander frei wählbar ist.

2. Sensor nach einem der vorhergehenden Ansprüche, dadurch gekennzeichnet, daß der Schaltzeitpunkt unsymmetrisch beeinflußbar ist, indem parallel zu dem Additionswiderstand eine Dioden/Widerstandskombination mit dem Ziel geschaltet wird, die gleitende Anpassung des Schaltpunktes in eine der Schaltrichtung der Diode entsprechende Richtung einseitig und unsymmetrisch zu beeinflussen.

3. Sensor nach einem der vorhergehenden Ansprüche, dadurch gekennzeichnet, daß der Schaltverstärker (1) durch eine Gegenkoppelung (11, 12) beschaltetwird, daß am Ausgang des Sensors (3) ein Analogsignal zur Verfügung steht, das dann weitestgehend von den Einflüssen von Temperatur und Feuchte befreit ist.

4. Sensor, insbesondere nach einem der vorhergehenden Ansprüche, dadurch gekennzeichnet, daß der zeitliche Verlauf der Nachführung des Schaltpunktes (Schwellwertes des Sensors (3)) linear ist, wobei die Zeitkonstante regelmäßig ein Vielfaches derjenigen Änderungsgeschwindigkeit ist, wie sie üblicherweise bei verkehrsbedingten Schadstoffbelastungen auftreten, also ca. 2-5 Minuten beträgt.

5. Sensor nach einem der vorhergehenden Ansprüche, dadurch gekennzeichnet, daß die Schaltspannung (Referenzspannung) der Anordnung aus einem Spannungsteiler (19) abgeleitet wird, die über ein Widerstandsnetzwerk (22,21) durch die vom Sensorsignal abhängige Korrekturspannung um einen Betrag beeinflußt werden kann, der aus dem Verhältnis der Widerstände (22) und (21) hervorgeht.

6. Sensor nach einem der vorhergehenden Ansprüche, dadurch gekennzeichnet, daß die Widerstande (22) und (21) sich aus den Innenwiderständen des Spannungsteilers (19) und des Digital-Analogwandlers (15) ergeben.

7. Sensor nach einem der vorhergehenden Ansprüche, dadurch gekennzeichnet, daß die die Referenzspannung korrigierende Korrekturspannung (Ux) gebildet wird, indem der Zählerinhalt eines Binärzählers (20) durch einen Digital-Analogwandler (15) in ein analoges Signal zurückverwandelt wird, das mit einem Komparator (13) mit der Sensorspannung verglichen wird, wobei die Ausgangsspannung des Komparators (13) den Zähler (20) entweder vorwärts oder rückwärts zählen läßt, je nachdem, ob die Ausgangsspannung (Ux) größer oder kleiner als die Sensorspannung ist, wobei die Zählfrequenz durch einen Oszillator (16) eingespeist wird.

8. Sensor nach einem der vorhergehenden Ansprüche, dadurch gekennzeichnet, daß die Zählerfrequenz nicht konstant ist, sondern dadurch von derAusgangsspannung des Digital-Analogwandlers (15) beeinflußt wird, daß die Clockfrequenz mit zunehmender Ausgangsspannung des Digital-Analogwandlers (15) langsamer wird, indem nach Überschreiten eines frei wählbaren Schwellwertes ein elektronischer Schalter (Transistor) eine zusätzliche Kapazität dem Frequenzgenerator so zuschaltet, daß die Generatorfrequenz sich verlangsamt.

9. Sensor nach einem der vorhergehenden Ansprüche, dadurch gekennzeichnet, daß die Temperaturdrift des Sensors (3) durch einen im Spannungsteilerzweig (14) angeordneten temperaturabhängigen Widerstand kompensiert wird, indem der temperaturabhängige Widerstand so dimensioniert ist, daß seine Temperaturabhängigkeit der Temperaturabhängigkeit des Sensors (3) entspricht.

10. Sensor nach einem der vorhergehenden Ansprüche, dadurch gekennzeichnet, daß das Schaltverhalten eine frei wählbare Hysterese aufweist, indem das Referenzspannungssignal nicht direkt dem Komparator (17) zugeführt wird, sondern über einen Widerstand (23), wobei durch einen weiteren Widerstand (30) eine Mitkopplung eintritt.

11. Sensor nach einem der vorhergehenden Ansprüche, dadurch gekennzeichnet, daß neben einem Schaltausgang (31) ein Analogausgang (32) implementiert ist, wobei das Sensorsignal auf einen Operationsverstärker (18) gegeben wird, dessen Verstärkung durch das Verhältnis der Widerstände (33) und (34) bestimmt wird, wobei der nicht invertierende Eingang des Operationsverstärkers (18) mit dem Referenzspannungssignal (Uref) beaufschlagt wird.

12. Sensor nach einem der vorhergehenden Ansprüche, dadurch gekennzeichnet, daß dann, wenn der Digital-Analogwandler (15) weniger Bit aufweist als der Zähler (20), der Digital-Analogwandler (15) so an den Zähler (20) angeschaltet wird, daß die niedrigen Bit des Zählers (20) vernachlässigt werden.

13. Sensor nach einem der vorhergehenden Ansprüche, dadurch gekennzeichnet, daß der Digital-Analogwandler (15) durch ein R/2R-Netzwerk ersetzt wird.

14. Sensor nach einem der vorhergehenden Ansprüche, dadurch gekennzeichnet, daß die Spannung am Ausgang des Digital-Analogwandlers (15) durch einen Kondensator (35) geglättet wird.

15. Sensor nach einem der vorhergehenden Ansprüche, dadurch gekennzeichnet, daß der Spannungsteiler (19) zumindestens teilweise aus einem einstellbaren Widerstand bestehen kann zum Zwecke der freien Einstellbarkeit der Referenzspannung.

16. Sensor nach einem der vorhergehenden Ansprüche, dadurch gekennzeichnet, daß die vier Verwendung findenden Operationsverstärker in einem Gehäuse integriert sind.

17. Sensor nach einem der vorhergehenden Ansprüche, dadurch gekennzeichnet, daß der Frequenzgenerator (16) seine Mittelspannung aus dem Spannungsteiler (19) bezieht, wobei vorteilhaft Bauteile gespart werden.

18. Sensor nach einem der vorhergehenden Ansprüche, dadurch gekennzeichnet, daß im Spannungsteiler der an der sich bildenden Referenzspannung am Ausgang des Digital-Analogwandlers (42) liegt, sich eine Schaltspannung (51) ausbildet, die am nichtinvertierenden Eingang des Komparators (44) liegt, wobei eine Diode (52) parallel zum Widerstand (47) liegt, die bei Erreichen eines bestimmten Pegels leitend wird und die Kennlinie der Schaltspannung (51) stark krümmt.

## Claims

1. Sensor for controlling recirculated air flaps of motor vehicles, consisting of a semi-conductor as a pollutant sensor element (3), and an electronic sensor signal preprocessing device (2, 7, 2), characterised in that the sensor signal preprocessing device comprises an integrating member (7, 8) by means of which a correction signal is generated by integration of the sensor signals; and in that the switching voltage of the switching amplifier (1) results from the addition of the voltage of the integrating member (7, 8), which is provided with a resistor (9) at the output, and the voltage of the voltage divider, (15) which is provided with a resistor (10) at the outlet, wherein the ratio of the two resistors (9, 10) to one another may be freely selected.

2. Sensor according to any one of the preceding claims, characterised in that the switching point may be influenced unsymmetrically in that a di- ode/resistor combination is connected in parallel to the addition resistor with the aim of influencing the sliding adaptation of the switching point in a direction corresponding to the switching direction of the diode in a one-sided and unsymmetrical manner.

3. Sensor according to any one of the preceding claims, characterised in that the switching amplifier (1) is wired up by means of a negative feedback (11, 12); and in that at the output of the sensor (3) an analog signal is available which is subsequently free from the influences of temperature and moisture as far as possible.

4. Sensor, in particular according to any one of the preceding claims, characterised in that the course over time of the follow-up of the switching point (threshold value of the sensor (3)) is linear, the time constant being uniformly a multiple of that of the alteration velocity, as it usually occurs in the case of pollutant burdens conditions by traffic, ie. approximately 2-5 minutes.

5. Sensor according to any one of the preceding claims, characterised in that the switching voltage (reference voltage) of the arrangement is derived from a voltage divider (19) which can be influenced via a resistor network (22, 21) by the correction voltage dependent on the sensor signal by an amount resulting from the ratio of resistors (22 and 21).

6. Sensor according to any one of the preceding claims, characterised in that the resistors (22) and (21) result from the inner resistors of the voltage divider (19) and the digital-analog transformer (15).

7. Sensor according to any one of the preceding claims, characterised in that the correction voltage (Ux) correcting the reference voltage is formed in that the counter content of a binary counter (20) is converted back by means of a digital-analog transformer (15) into an analog signal which is compared with the sensor voltage by means of a comparator (13), the output voltage of the comparator (13) allowing the counter (20) to count either forwards or backwards depending on whether the output voltage (Ux) is larger or smaller than the sensor voltage, the counting frequency being fed in by means of an oscillator (16).

8. Sensor according to any one of the preceding claims, characterised in that the counting frequency is not constant but is influenced by the output voltage of the digital-analog transformer (15) in that the clock frequency becomes slower as the output voltage of the digital-analog transformer (15) increases, in that when a freely selectable threshold value has been exceeded, an electronic switch (transistor) connects an additional capacity to the frequency generator in such a way that the generator frequency decelerates.

9. Sensor according to any one of the preceding claims, characterised in that the temperature drift of the sensor (3) is compensated by a temperature-dependent resistor disposed in the voltage divider branch (14), in that the temperature-dependent resistor is dimensioned in such a way that its temperature dependency corresponds to the temperature dependency of the sensor (3).

10. Sensor according to any one of the preceding claims, characterised in that the switching function comprises a freely selectable hysteresis in that the reference voltage signal is not supplied directly to the comparator (17) but via a resistor (23), a positive feedback occurring by means of a further resistor (30).

11. Sensor according to any one of the preceding claims, characterised in that an analog output (32) is implemented adjacent a switching output (31), the sensor signal being passed to an operation amplifier (18) of which the amplification is determined by the ratio of the resistors (33) and (34), the noninverting input of the operation amplifier (18) being acted upon by the reference voltage signal (Uref).

12. Sensor according to any one of the preceding claims, characterised in that when the digital-analog transformer (15) comprises fewer bits than the counter (20), the digital-analog transformer (15) is connected to the counter (20) in such a way that the lower bit of the counter (20) is omitted.

13. Sensor according to any one of the preceding claims, characterised in that the digital-analog transformer (15) is replaced by an R/2R-Network.

14. Sensor according to any one of the preceding claims, characterised in that voltage at the output of the digital-analog transformer (15) is smoothed by a capacitor (35).

15. Sensor according to any one of the preceding claims, characterised in that the voltage divider (19) may consist at least partially of an adjustable resistor in order that the reference voltage may be freely adjustable.

16. Sensor according to any one of the preceding claims, characterised in that the four operation amplifiers used are integrated in a housing.

17. Sensor according to any one of the preceding claims, characterised in that the frequency generator (16) obtains its average voltage from the voltage divider (19), thereby advantageously saving components.

18. Sensor according to any one of the preceding claims, characterised in that in the voltage divider, which lies at the reference voltage forming at the output of the digital-analog transformer (42), a switching voltage (51) is formed which lies at the non-inverting input of the comparator (44), a diode (52) being parallel to the resistor (47), which diode becomes conductive when a given level is reached and curves the characteristic curve of the switching voltage (51) to a large extent.

## Revendications

1. Capteur pour la commande de volets de circulation d'air de véhicules automobiles, constitué par un semiconducteur en tant qu'élément capteur de matières nocives (3) et par un circuit électronique de prétraitement (2, 7, 8) du signal de capteur, caractérisé par le fait que le circuit de prétraitement du signal de capteur comporte un circuit d'intégration (7, 8) au moyen duquel on produit un signal de correction par intégration du signal de capteur et par le fait que la tension de commutation de l'amplificateur de commutation (1) résulte de ce que les tensions à la sortie de l'organe d'intégration (7, 8) comportant une résistance (9) et à la sortie du diviseur de tension (6) comportant une résistance (10), le rapport mutuel de ces deux résistances (9, 10) pouvant être choisi librement.

2. Capteur selon la revendication précédente, caractérisé par le fait que l'instant de commutation peut être influencé asymétriquement grâce au branchement, en parallèle de la résistance d'addition, d'une combinaison d'iode/résistance dans le but d'influencer l'adaptation glissante du point de commutation, unilatéralement et asymétriquement, dans une direction correspondant au sens de commutation de la diode.

3. Capteur selon l'une des revendications précédentes, caractérisé par le fait que l'amplificateur de commutation (1) est doté d'une contre- réaction (11, 12), par le fait qu'un signal analogique est disponible à la sortie du capteur (3) ce signal étant alors très largement exempt d'influence de température et humidité.

4. Capteur, notamment selon l'une des revendications précédentes, caractérisé par le fait que l'évolution dans le temps du suivi du point de commutation (valeur de seuil du capteur (3)) est linéaire, la constante de temps étant régulièrement un multiple de la vitesse de variation telle qu'elle se présente habituellement dans le cas des pollutions liées à la circulation, donc environ 2 à 5 minutes.

5. Capteur selon l'une des revendications précédentes, caractérisé par le fait que la tension de commutation (tension de référence) du dispositif est dérivée d'un diviseur de tension (19) qui, par l'intermédiaire d'un réseau de résistances (22, 21), peut recevoir de la tension de correction dépendant du signal de capteur une influence dont l'ampleur est donnée par le rapport des résistance (22) et (21).

6. Capteur selon l'une des revendications précédentes, caractérisé par le fait que les résistances (22) et (21) résultent des résistances internes du diviseur de tension (19) et du convertisseur numérique-analogique (15).

7. Capteur selon l'une des revendications précédentes, caractérisé par le fait que la tension de correction (Ux) corrigeant la tension de référence est formée en reconvertissant, par un convertisseur numérique-analogique (15), le contenu d'un convertisseur numérique-analogique (15), le contenu d'un compteur binaire (20) et un signal analogique qu'un comparateur (13) compare à la tension de capteur, la tension de sortie du comparateur (13) faisant compter le compteur (20), soit dans le sens croissant, soit dans le sens décroissant, selon que la tension de sortie (Ux) est plus grande ou plus petite que la tension de capteur, la fréquence de comptage étant fourn ie par u n oscillateur (16).

8. Capteur selon l'une des revendications précédentes, caractérisé par le fait que la fréquence du compteur n'est pas constante mais est influencée par la tension de sortie du convertisseur numérique-analogique (15) parce que la fréquence d'horloge ralentit lorsque la tension de sortie du convertisseur numérique-analogique (15) croit, ceci grâce au fait qu'après dépassement d'une valeur de seuil pouvant être librement choisie un commutateur électronique (transistor) applique au générateur de fréquence une capacité supplémentaire, de façon telle que la fréquence du générateur se ralentit.

9. Capteur selon l'une des revendications précédentes, caractérisé par le fait que la dérive de température du capteur (3) est compensée par une résistance dépendant de la température, agencée dans la branche du diviseur de tension (14), la résistance sensible à la température étant dimensionnée de manière que sa sensibilité à la température corresponde à la sensibilité à la température du capteur (3).

10. Capteur selon l'une des revendications précédentes, caractérisé par le fait que le comportement de commutation présente une hystérésis pouvant être choisie librement, en ceci que le signal de tension de référence n'est pas transmis directement au comparateur (17) mais par l'intermédiaire d'une résistance (23), une réaction positive intervenant par une autre résistance (30).

11. Capteur selon l'une des revendications précédentes, caractérisé par le fait qu'une sortie analogique (32) est réalisée en plus d'une sortie de commutation (31), le signal de capteur étant fourni à un amplificateur opérationnel (18), dont l'amplification est déterminée par le rapport des résistances (33) et (34) l'entrée non inverseuse de l'amplificateur opérationnel (18) étant attaquée par le signal de tension de référence (Uref).

12. Capteur selon l'une des revendications précédentes, caractérisé par le fait que, dans le cas où le convertisseur numérique-analogique (15) présente moins de bits que le compteur (20), le convertisseur numérique-analogique (15) est raccordé au compteur (20) de manière que les bits les plus bas du compteur (20) soient ignorés.

13. Capteur selon l'une des revendications précédentes, caractérisé par le fait que le convertisseur numérique-analogique (15) est remplacé par un réseau R/2R.

14. Capteur selon l'une des revendications précédentes, caractérisé par le fait que la tension à la sortie du convertisseur numérique-analogique (15) est lissée par un condensateur (35).

15. Capteur selon l'une des revendications précédentes, caractérisé par le fait que le diviseur de tension (19) peut consister au moins en partie en une résistance réglable, afin de permettre le libre réglage de la tension de référence.

16. Capteur selon l'une des revendications précédentes, caractérisé par le fait que les quatre amplificateurs opérationnels utilisés sont intégrés dans un boîtier.

17. Capteur selon l'une des revendications précédentes, caractérisé par le fait que le générateur de fréquence (19), des composants étant avantageusement économisés.

18. Capteur selon l'une des revendications précédentes, caractérisé par le fait qu'il se forme, dans le diviseur auquel est appliquée la tension de référence se formant à la sortie du convertisseur numérique-analogique (42), une tension de commutation (51) est qui présente à l'entrée non inverseuse du comparateur (44), une diode (52) en parallèle de la résistance (47), devenant conductrice lorsqu'un niveau déterminé est atteint et courbant fortement la caractéristique de la tension de commutation (51).
